# EUROPÄISCHE PATENTSCHRIFT

(11) **EP 1 814 405 B1**
(45) Veröffentlichungstag und Bekanntmachung des Hinweises auf die Patenterteilung: **13.04.2011**
(21) Anmeldenummer: 05794418.3
(22) Anmeldetag: 18.10.2005
(51) Int. Cl.: A23L 1/19

(54) **VERFAHREN ZUR HERSTELLUNG EINES EINEN FETTTRÄGER, EINEN STABILISATOR BZW. EIN GELIERMITTEL UND LÖSEMITTEL FÜR DEN STABILISATOR BZW. DAS GELIERMITTEL ENTHALTENDEN NAHRUNGSMITTELS**
METHOD FOR PRODUCING A FOODSTUFF THAT CONTAINS A FAT CARRIER, A STABILISER OR A GELATINISING AGENT AND SOLVENTS FOR THE STABILISER OR GELATINISING AGENT
PROCEDE POUR REALISER UN PRODUIT ALIMENTAIRE CONTENANT UN SUPPORT LIPIDIQUE, UN STABILISATEUR OU UN GELIFIANT ET UN SOLVANT POUR LE STABILISATEUR OU LE GELIFIANT

(30) Priorität: 19.10.2004 AT 17502004
(43) Veröffentlichungstag der Anmeldung: 08.08.2007
(73) Patentinhaber: HAMA Foodservice GesmbH, 5322 Hof bei Salzburg (AT)
(72) Erfinder: HAINDL, Rudolf, 5020 Salzburg (AT); MANDL, Hans, 6542 Pfunds (AT)
(74) Vertreter: Torggler, Paul Norbert
(86) Internationale Anmeldenummer: PCT/AT2005/000414
(87) Internationale Veröffentlichungsnummer: WO 2006/042353

(56) Entgegenhaltungen:
- EP-A- 1 086 625
- EP-A- 1 128 735
- WO-A1-96/21361
- DE-A1- 19 860 437
- US-A- 3 620 769
- US-A- 5 338 563
- US-B1- 6 235 321

## Beschreibung

Die Erfindung betrifft ein Verfahren zur Herstellung eines einen Fettträger, einen Stabilisator bzw. ein Geliermittel und ein Lösemittel für den Stabilisator bzw. das Geliermittel enthaltenden Nahrungsmittels, wobei der Fettträger pflanzliche Fettanteile beinhaltet, bei dem der Stabilisator bzw. das Geliermittel im vorzugsweise erwärmten Lösemittel aufgelöst wird und diese Mischung anschließend in erwärmtem Zustand quellen gelassen wird, bevor dieser Mischung der Fettträger beigemengt wird, wobei die pflanzlichen Fettanteile des Fettträgers in flüssiger Form beigemischt werden.

Die US 5,338,563 zeigt diesbezüglich ein Verfahren zur Herstellung eines emulgierten, fetthaltigen Aufstriches. Bevorzugt verwendete Fette sind teilweise gehärtete Maisöle, welche soweit gehärtet worden sind, dass sie ein Schmelzprofil erfüllen. Dieses Schmelzprofil stellt bei Raumtemperatur einen Anteil an festem Fett von 7 bis 20% dar.

Die EP 1 086 625 A1 zeigt ein Verfahren zur Herstellung eines Gelatine und Rahm enthaltenden Milchproduktes. Als Lösemittel für die Gelatine wird Rahm bzw. Magermilch verwendet.

Die DE 39 07 676 A1 zeigt ein Verfahren zur Herstellung einer Margarine mit reduziertem Fettgehalt, wobei als wässriges Medium Milch verwendet wird.

Bei den bisher bekannten Verfahren fungiert Magermilch oder entrahmte Milch als Lösemittel für das Geliermittel, das entweder von Gelatine oder pflanzlichen Hydrokolloiden gebildet sein kann. Nach dem Auflösen des Geliermittels im Lösemittel werden dieser Mischung, vor dem Sterilisieren und Homogenisieren, pflanzliche Fette zur Einstellung des Fettgehaltes des Endproduktes beigemischt. Als schwierig hat sich dabei das Dispergieren der pflanzlichen Fette in der das Lösemittel und das Geliermittel enthaltenden Mischung herausgestellt, da eine Erwärmung des Lösemittel und Geliermittel bzw. Stabilisator enthaltenden Grundansatzes vermieden werden sollte, um die Stabilisations- bzw. Gelierfähigkeiten der verwendeten Stabilisatoren bzw. Geliermittel nicht negativ zu beeinflussen, was bedeutet, dass die vorwiegend zum Einsatz kommenden pflanzlichen Fette, beispielsweise Margarine, dem Grundansatz bei annähender Zimmertemperatur in fester Form beigegeben und durch Einwirken von Scherkräften mit dem Grundansatz vermischt wurden.

Es ist klar, dass mit einem derartigen Verfahren lediglich eine unzufriedenstellende Verteilung der pflanzlichen Fettanteile im Grundansatz erreicht werden kann, weshalb es sich die Erfindung zur Aufgabe gemacht hat, ein neuartiges Verfahren zu schaffen, mit dem die pflanzlichen Fettanteile des Fettträgers im Grundansatz besser dispergiert werden können.

Diese Aufgabe wird nach der Erfindung durch die Merkmale von Anspruch 1 gelöst.

Ging man bisher davon aus, dass eine Erwärmung des das Lösemittel und den Stabilisator bzw. das Geliermittel enthaltenden Grundansatzes nach Möglichkeit zu vermeiden ist, um ein Zerfallen des Endproduktes zu verhindern, haben Versuche der Anmelderin zu dem überraschenden Ergebnis geführt, dass sich bei entsprechender Auswahl der Rohmaterialien und bei Einhaltung bestimmter Temperatur- und Druckparameter die Erwärmung des Grundansatzes nicht nur nicht negativ auf die Standfestigkeit des Endproduktes auswirkt, sondern es zudem ermöglicht, pflanzliche Fette, deren Schmelzpunkt erfindungsgemäß zwischen 28°C und 47°C, günstigerweise über 35°C, vorzugsweise bei etwa 42°C liegt, dem Grundansatz in flüssiger Form beizumischen.

Gemäß einem alternativen Ausführungsbeispiel der Erfindung ist also vorgesehen, dass die pflanzlichen Fettanteile und die zumindest das Lösemittel und den Stabilisator bzw. das Geliermittel enthaltende Mischung beim Vermengen eine über Raumtemperatur liegende Temperatur aufweisen, wodurch das Dispergieren der pflanzlichen Fette im Grundansatz wesentlich erleichtert wird, was zu einer stark verbesserten Verteilung der Fettteilchen in der resultierenden Dispersion führt. Die verwendeten pflanzlichen Fettanteile weisen gemäß einem weiteren Ausführungsbeispiel der Erfindung einen Anteil an gesättigten Fettsäuren von wenigstens 35 %, vorzugsweise von wenigstens 45 % auf.

Dabei hat es sich gemäß einer bevorzugten Ausführungsform der Erfindung als besonders günstig herausgestellt, wenn die pflanzlichen Fettanteile des Fettträgers, die im Wesentlichen, vorzugsweise ausschließlich, von vorzugsweise nicht-laurischem Palmöl und/oder Kokosfett und/oder Kakaobutter und/oder Palmkernfett oder einer Mischung davon gebildet sein können, auf eine zwischen 2 % und 20 %, vorzugsweise 10 %, über dem Schmelzpunkt liegende Temperatur erwärmt werden, bevor sie der das Lösemittel und den Stabilisator bzw. das Geliermittel enthaltenden Mischung beigemengt werden.

Eine Grundidee der Erfindung besteht also darin, die flüssigen pflanzlichen Fette und den das Lösemittel und den Stabilisator bzw. das Geliermittel enthaltenden Grundansatz bei annähernd gleicher, über Raumtemperatur liegender Temperatur zu vermischen, wodurch sich eine wesentlich feinere Verteilung der Fettteilchen in der resultierenden Dispersion ergibt. Als Lösemittel wird in diesem Zusammenhang die Flüssigkeit bezeichnet, in der der Quellvorgang des Stabilisators bzw. Geliermittels zumindest beginnt.

Dabei wird das Lösemittel gemäß einer nicht erfindungsgemäßen Ausführungsvariante der Erfindung von Magermilch mit einem Fettgehalt von weniger als 0,3 %, vorzugsweise weniger als 0,1 %, gebildet. Es ist aber auch möglich, dass das Lösemittel eine Mischung aus Wasser und Magermilchpulver bzw. Magermilchkonzentrat ist, wobei in diesem speziellen Fall der Stabilisator bzw. das Geliermittel vorzugsweise im erwärmten Wasser aufgelöst wird, bevor das vorzugsweise flüssige Magermilchkonzentrat bzw. das Magermilchpulver in diese Wasser und Stabilisator bzw. Geliermittel enthaltende Mischung eingerührt wird.

Ein erfindungsgemäßes Ausführungsbeispiel, bei dem das Lösemittel frei von tierischen Fetten ist, sieht vor, Sojamilch als Lösemittel für das Geliermittel zu verwenden. In diesem Fall ist zu beachten, dass die Sojamilch einen wesentlich höheren Fettanteil als Magermilch aufweist, wodurch der Fettanteil des Lösemittels am Nahrungsmittel zwischen 1,5% und 6 %, vorzugsweise zwischen 3 % und 4 %, liegt. Dadurch, dass der Fettanteil der Sojamilch am Endprodukt gemäß einem bevorzugten Ausführungsbeispiel der Erfindung bei ca. 3,5 % liegt, müssen dem Grundansatz weniger tierische und/oder pflanzliche Fettanteile zur Einstellung des Fettgehaltes des Endproduktes beigemengt werden.

Es können auch verschiedene Stabilisatoren bzw. Geliermittel zur Umsetzung des Erfindungsgedankens eingesetzt werden. Dabei sieht eine Ausführungsvariante der Erfindung vor, dass der Stabilisator bzw. das Geliermittel Gelatine ist. Versuche der Anmelderin haben ergeben, dass insbesondere bei der Verwendung von Gelatine als Geliermittel der entsprechenden Auswahl und Kombination der Rohstoffe für die Gelatine eine große Bedeutung zukommt, um sicherstellen zu können, dass die Gelatine ihre Quelleigenschaften beim Erwärmen des Grundansatzes nicht verliert. Als günstig hat es sich dabei herausgestellt, wenn die vorzugsweise granulatförmige Gelatine eine Körnung zwischen 35 und 65 mesh, vorzugsweise 50 mesh, und/oder eine Gallertfestigkeit zwischen 200 und 250 Bloomgram, vorzugsweise 220 Bloomgram, aufweist und die Viskosität der Gelatine zwischen 34 und 46 Millibar, vorzugsweise bei 41 Millibar liegt.

Ein weiteres Ausführungsbeispiel der Erfindung, welches wiederum darauf abzielt, das herzustellende Nahrungsmittel möglichst frei von tierischen Produkten zu halten, sieht vor, dass der Stabilisator bzw. das Geliermittel ausschließlich pflanzliche Rohstoffe, vorzugsweise pflanzliche Hydrokolloide, beinhaltet. Ein geeigneter Stabilisator bzw. ein geeignetes Geliermittel kann dabei eine Mischung von Carrageen, Cellulose sowie Pektin oder Konjac-Mehl sein, wobei es sich zur Steigerung der Ölaufnahmefähigkeit des Endproduktes beziehungsweise für eine bessere Wiedererlangung der schnittfähigen Konsistenz des Endproduktes nach dem Einwirken von Scherkräften als vorteilhaft herausgestellt hat, wenn der Stabilisator bzw. das Geliermittel zusätzlich Alginat, vorzugsweise Sodium-Alginat, und/oder Guar-Gummi beinhaltet.

Obwohl es durchaus denkbar ist, dass der Stabilisator bzw. das Geliermittel sowohl nicht-tierische als auch tierische Rohstoffe beinhalten, hat die Praxis gezeigt, dass es für einen einfachen Herstellungsprozess sinnvoll ist, für den Stabilisator bzw. das Geliermittel ausschließlich nicht-tierische Rohstoffe oder ausschließlich tierische Rohstoffe zu verwenden. Diese Trennung gilt jedoch nicht für den das Lösemittel und das Geliermittel enthaltenden Grundansatz, das heißt, es ergeben sich für den Herstellungsprozess keine wesentlichen Nachteile, wenn ein pflanzliches Lösemittel mit einem tierischen Stabilisator bzw. Geliermittel vermischt wird.

Unabhängig von der Art des verwendeten Lösemittels und Stabilisators bzw. des Geliermittels ist es gemäß einem weiteren Ausführungsbeispiel der Erfindung nach vorteilhaft, wenn die Lösemittel und Stabilisator bzw. Geliermittel enthaltende Mischung zwischen 15 und 45 Minuten, vorzugsweise 25 und 30 Minuten, quellen gelassen wird, um eine innige Vermischung des Stabilisators bzw. des Geliermittels mit dem Lösemittel zu erzielen. Dabei sieht eine Ausführungsvariante vor, dass der Stabilisator bzw. das Geliermittel in einem ersten Schritt in einem Teil der Gesamtlösemittelmenge aufgelöst wird und dieser Mischung danach in einem zweiten Schritt die restliche Lösemittelmenge beigemischt wird bevor der Quellvorgang beginnt.

Es kommt also in erster Linie nicht darauf an, wie die Lösemittel und Stabilisator bzw. das Geliermittel enthaltende Mischung hergestellt wird, wesentlich ist vielmehr, dass die Zeit- und Temperaturparameter eingehalten werden, das heißt insbesondere der Quellvorgang des Grundansatzes bei erhöhter Temperatur, die gemäß einem bevorzugten Ausführungsbeispiel der Erfindung zwischen 10 °C und 35 °C, vorzugsweise bei etwa 20 °C, liegt, führt zu einem Nahrungsmittel, welches einerseits mehrmals erwärmt und abgekühlt werden kann ohne zu zerfallen und andererseits auch nach dem Einwirken von Scherkräften wieder schnittfähig wird.

Für die vollständige Auflösung des Stabilisators bzw. Geliermittels hat es sich dabei als günstig herausgestellt, wenn die Lösemittel (2, 2')-Stabilisator bzw. Geliermittel (1)-Mischung nach dem Quellvorgang und vor dem Vermischen mit dem Fettträger kurzfristig auf eine über 50 °C liegende Temperatur, vorzugsweise auf 55 °C, erhitzt wird.

Wie bereits erwähnt, hat es sich für einen einfachen Herstellungsprozess als vorteilhaft erwiesen, wenn beim Lösemittel und beim Geliermittel keine Mischformen verwendet werden, das heißt, sowohl das Geliermittel als auch das Lösemittel beinhalten entweder ausschließlich nicht erfindungsgemäße tierische Rohstoffe oder ausschließlich nicht-tierische Rohstoffe. Überraschenderweise gilt dieses Prinzip für den Fettträger nicht. So sieht zwar ein Ausführungsbeispiel des erfindungsgemäßen Verfahrens vor, dass der Fettträger ausschließlich pflanzliche Fette, vorzugsweise nicht-laurisches Palmöl, beinhaltet.

Gemäß einem anderen Ausführungsbeispiel der Erfindung beinhaltet der Fettträger aber auch tierische Fette, vorzugsweise Rahm. Bevorzugterweise halten sich bei einem solchen gemischten Fettträger die Anteile der tierischen und nicht-tierischen Fette in etwa die Waage, sodass der Fettträger ca. 50 % pflanzliche und ca. 50 % tierische Fette beinhaltet. Es ist aber auch möglich, dass der Fettträger zu mehr als 50 % aus pflanzlichen Fetten oder zu mehr als 50 % aus tierischen Fetten besteht, jedoch sollte der Anteil der tierischen Fette am Fettträger bei einem gemischten Fettträger über 20 %, vorzugsweise über 35 %, liegen. Das Verhältnis der tierischen zu den pflanzlichen Fetten liegt beim erfindungsgemäßen Verfahren somit zwischen 1 bis 5 : 5 bis 1, vorzugsweise zwischen 1 bis 3 : 3 bis 1.

Bei gemischten Fettträgern kann eine Feinverteilung der tierischen Fettanteile im das Lösemittel und den Stabilisator bzw. das Geliermittel enthaltenden Grundansatz gemäß einer weiteren Ausführungsform dann erreicht werden, wenn die tierischen Fette, vorzugsweise Rahm, der das Lösemittel und den Stabilisator enthaltenden Mischung unter ständigem Rühren beigemengt werden, vorzugsweise nach Beendigung des Quellvorgangs, wobei die Temperatur der tierischen Fette, vorzugsweise Rahm, beim Vermischen mit der Lösemittel-Stabilisator/Geliermittel-Mischung bei ca. 5 °C liegen sollte.

Unabhängig davon, ob der Fettträger ausschließlich pflanzliche Fettanteile oder pflanzliche und tierische Fettanteile beinhaltet, wird das Dispergieren der flüssigen pflanzlichen Fette in der Lösemittel-Stabilisator/Geliermittel-Mischung (wenn der Fettträger keine tierischen Fettanteile beinhaltet) bzw. in der Lösemittel-Stabilisator/Geliermittel-tierische Fette-Mischung (wenn der Fettträger auch tierische Fette beinhaltet) dann erleichtert, wenn die Temperatur des jeweiligen Grundansatzes auf eine zwischen 2 % und 20 %, vorzugsweise 10 %, über dem Schmelzpunkt der pflanzlichen Fettanteile liegende Temperatur eingestellt wird. Umgekehrt ist gemäß einer weiteren Ausführungsform der Erfindung vorgesehen, dass die Temperatur der flüssigen pflanzlichen Fette beim Einrühren in die Lösemittel-Stabilisator-Mischung bzw. Lösemittel-Stabilisator-tierische-Fette-Mischung in etwa der Temperatur der Lösemittel-Stabilisator-Mischung bzw. Lösemittel-Stabilisator-tierische-Fette-Mischung entspricht. Das bedeutet für den Fall, dass die pflanzlichen Fette des Fettträgers von nicht-laurischem Palmöl gebildet werden, dass sowohl die Temperatur des Grundansatzes als auch die Temperatur des Palmöles beim Einrühren in den Grundansatz bei ca. 45 °C liegt.

Das Auflösen der flüssigen pflanzlichen Fette im Grundansatz, kann beispielsweise unter starkem Rühren, vorzugsweise mit 6.000 bis 8.000 U/min, beispielsweise mittels eines Homo-Jet-Mixers erfolgen. Aber auch die Verwendung eines Homogenisators zum Dispergieren der flüssigen pflanzlichen Fette ist denkbar, wobei die Homogenisation vorzugsweise zweistufig erfolgen sollte.

Für eine lange ungekühlte Haltbarkeit des Endproduktes ist es besonders vorteilhaft, wenn die Lösemittel-Stabilisator-Fettträger-Mischung sterilisiert und homogenisiert wird, bevor sie in eine Verpackung abgefüllt wird, wobei zu Erzielung einer gleichmäßigen Homogenisation vorgesehen ist, dass die Homogenisation bei einer Temperatur unter 80 °C, vorzugsweise zwischen 60 °C und 65 °C, vorzugsweise zweistufig erfolgt, wobei die erste Stufe der Homogenisation bei einem Druck von etwa 120 bar und die zweite Stufe bei einem Druck von etwa 70 bar erfolgt. Weiters sieht ein Ausführungsbeispiel der Erfindung vor, die Mischung vor dem Abfüllen in die Verpackung, vorzugsweise vor dem Homogenisieren, bei einer über 135 °C, vorzugsweise über 140 °C liegenden Temperatur in einer UHT-Anlage zu sterilisieren. Eine derartige UHT-Anlage kann beispielsweise einen Röhren- bzw. Plattenerhitzer oder aber auch eine Dampfstrahlpumpe umfassen, wobei in zweiterem Fall die Mischung für ca. 6 sec auf eine über 135 °C liegende Temperatur, vorzugsweise auf etwa 142 °C, erhitzt wird.

Um zu verhindern, dass es beim UHT-Prozess zu Ausflockungen kommen kann, ist gemäß einem weiteren Ausführungsbeispiel der Erfindung vorgesehen, dass der pH-Wert der Mischung vor dem Sterilisieren auf einen über 6, vorzugsweise zwischen 6,6 und 6,7, liegenden Wert eingestellt wird. Diese Einstellung des pH-Wertes kann beispielsweise mittels Natronlauge (NaOH, 1 Teil Lauge 5 Teile Wasser) erfolgen.

Nachdem der pH-Wert kontrolliert bzw. auf den gewünschten Wert eingestellt worden ist, hat es sich als günstig erwiesen, die Mischung vor dem Sterilisieren bzw. Homogenisieren zu filtern, wobei Partikel mit einer Korngröße über 15 mesh, vorzugsweise über 20 mesh, herausgefiltert werden.

Nach dem Sterilisieren und Homogenisieren wird die Mischung vor dem Abfüllen in die Verpackung gemäß einer weiteren Ausführungsform der Erfindung in einen Steriltank gepumpt und dort auf eine zwischen 20 °C und 35 °C, vorzugsweise zwischen 26 °C und 28 °C liegende Temperatur gekühlt. In diesem Steriltank, der einen Doppelmantel zum Kühlen bzw. zum Erwärmen aufweist, wird die Mischung bis zur Abfüllung, die vorzugsweise in einer aseptischen Anlage durchgeführt und bei ca. 26 °C erfolgt, durch Rühren in Bewegung gehalten, um eine Entmischung des Nahrungsmittels bzw. ein Absinken des Stabilisators bzw. Geliermittels zu vermeiden.

Gemäß einem weiteren Aspekt der Erfindung soll ein nach dem erfindungsgemäßen Verfahren hergestelltes Nahrungsmittel angegeben werden. Ein derartiges Nahrungsmittel, dessen pflanzliche Fettanteile einen über 35°C liegenden Schmelzpunkt aufweisen und dessen Fettgehalt bei ca. 15 % liegt, ist strukturirreversibel, was soviel bedeutet, dass es mehrmals erwärmt und wieder abgekühlt werden kann ohne zu zerfallen, das heißt, die einmal ausgebildete Proteinstruktur geht auch dann nicht mehr verloren, wenn der Aggregatzustand des Nahrungsmittels beispielsweise durch Einfluss von Wärme verändert wird. Dieser Vorgang des Erwärmens und Abkühlens kann dabei beliebig oft wiederholt werden, das Nahrungsmittel weist nach dem Abkühlen immer wieder die ursprüngliche schnittfeste Konsistenz auf.

Weitere Versuche der Anmelderin haben gezeigt, dass ein mit dem erfindungsgemäßen Herstellungsverfahren produziertes Nahrungsmittel bis zu einem pH-Wert von etwa 3,7 säurestabil ist, während vergleichbare Nahrungsmittel im günstigsten Falle lediglich bis zu einem pH-Wert von 4,5 bis 4,2 säurestabil sind, das heißt, der Ausflockungspunkt liegt beim neuwertigen Nahrungsmittel wesentlich tiefer als bei herkömmlichen Nahrungsmitteln, sodass sich ein weitaus größeres Anwendungsgebiet für nach dem erfindungsgemäßen Verfahren hergestellte Nahrungsmittel ergibt.

Dabei sieht ein erfindungsgemäßes Ausführungsbeispiel eines neuartigen Nahrungsmittels, bei dem das Lösemittel von Sojamilch gebildet wird vor, dass der Fettanteil der Sojamilch am Nahrungsmittel bei ca. 3,5 % liegt, während der Fettanteil des Fettträgers bei ca. 11,5 % liegt. Wird das Lösungsmittel gemäß einem nicht erfindungsgemäßen Ausführungsbeispiel der Erfindung von Magermilch gebildet, liegt der Fettanteil des Fettträgers bei ca. 15 %.

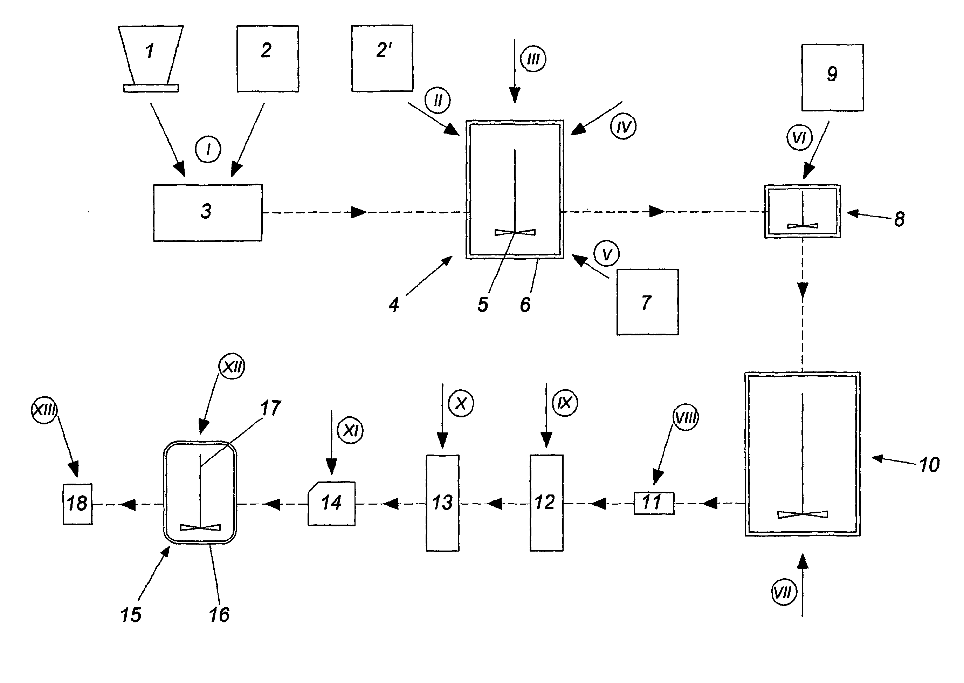

Weitere Einzelheiten der Erfindung und der durch sie erzielten Vorteile ergeben sich aus der nachstehenden Erläuterung des in der Zeichnung dargestellten Ausführungsbeispiels. Darin zeigt die einzige Figur eine schematische Darstellung eines erfindungsgemäßen Verfahrensablaufes.

In einem ersten Schritt 1 wird das Geliermittel 1 mit einem Teil 2 der Gesamtlösemittelmenge in einer Mischeinrichtung 3, beispielsweise in einem Jet-Mixer, vermischt. Beim gezeigten Ausführungsbeispiel wird das Geliermittel 1 von Gelatine mit einer Korngröße von 50 mesh und einer Gallertfestigkeit von 220 Bloomgram gebildet, während als Lösemittel nicht erfindungsgemäße Magermilch mit einem Fettgehalt von 0,3 % zum Einsatz kommt. In der Mischeinrichtung 3 wird die

Gesamtmenge des Geliermittels 1 mit einem Teil 2 der Gesamtlösemittelmenge vermischt, wobei der Teil 2 der Lösemittelmenge auf einer Temperatur von ca. 5 °C gehalten wird.

Selbstverständlich wäre es auch möglich, die als Lösemittel verwendete, nicht erfindungsgemäße Magermilch durch mit Wasser verdünntes, nicht erfindungsgemäßes Magermilchkonzentrat zu erhalten. In diesem Fall würde man das Geliermittel 1 in einem Teil der Gesamtwassermenge auflösen und dieser Mischung vor dem Einbringen des Magermilchkonzentrates die restlichen Wasserteile beimengen.

Nachdem der Stabilisator bzw. das Geliermittel 1 mit einem Teil 2 der Gesamtlösemittelmenge in der Mischeinrichtung 3 vermischt worden ist, wird diese Mischung beispielsweise mittels einer (nicht dargestellte) Pumpe in einen Mischtank 4 gepumpt, der als Stahltank mit einem Doppelmantel 6 ausgebildet sein kann und in dem eine Rühreinrichtung 5 angeordnet ist, die sich mit etwa 150 bis 200 U/min bewegt. In weiterer Folge (Schritt II) wird im Mischtank 4 der Geliermittel 1-Lösemittel 2-Mischung die Restlösemittelmenge 2', die ebenfalls eine Temperatur von etwa 5 °C aufweist, beigemengt. Die resultierende Mischung, die 100 % des Geliermittels 1 und 100 % des Lösemittels 2, 2' enthält, wird im Mischtank 4 unter ständigem Rühren ca. 25 bis 30 min bei einer zwischen 10 °C und 35 °C liegenden Temperatur quellen gelassen, wobei sich das Rührwerk 5 mit ca. 150 bis 200 U/min dreht (Schritt III).

Im nächsten Schritt IV wird die im Mischtank 4 befindliche Mischung aus Geliermittel 1 und Lösemittel 2, 2' kurzfristig auf 55 °C erwärmt. Diese Erwärmung kann beispielsweise mittels durch den Doppelmantel 6 des Mischtankes 4 geführtem, heißem Dampf erfolgen. Während der ganzen Zeit sollte die Mischung mittels des Rührwerkes 5 in Bewegung gehalten werden, um auf diese Weise eine Entmischung zu verhindern und ein vollständiges Auflösen des Geliermittels sicherzustellen.

Danach werden im Schritt V der Geliermittel 1 und Lösemittel 2, 2' enthaltenden Mischung tierische Fette 7 ebenfalls unter ständigem Rühren zugegeben. Beim dargestellten Ausführungsbeispiel werden diese tierischen Fette 7 von Rahm mit einem Fettgehalt zwischen 30 und 50 % gebildet, wobei die Temperatur der tierischen Fette 7 beim Einrühren ca. 5 °C beträgt.

Durch das Einrühren der ca. 5 °C kalten tierischen Fette 7 kühlt die Lösemittel 2,2'-Geliermittel 1-tierische Fette 7-Mischung auf eine unter 50 °C liegende Temperatur ab und wird im nächsten Schritt VI in eine Homogenisationseinrichtung 8 gepumpt und dort, falls notwendig, auf eine Temperatur von 45 °C eingestellt. Diese Temperatur von 45 °C liegt in etwa 10 % über dem Schmelzpunkt der pflanzlichen Fette 9, welche im Schritt VI der in der Homogenisationseinrichtung 8 befindlichen Mischung beigemengt werden. Die Homogenisationseinrichtung 8 kann dabei von einem Homo-Jet-Mixer, mit dem die pflanzlichen Fette 9 mit 6000 bis 8000 U/min eingerührt werden können, oder aber von einem herkömmlichen zweistufigen Homogenisator mit den Druckstufen 80/60 gebildet sein.

Eine Grundidee des erfindungsgemäßen Verfahrens besteht also darin, die pflanzlichen Fette 9 in flüssiger Form einzurühren, das heißt, die pflanzlichen Fette 9 müssen beim Einrühren auf eine über dem Schmelzpunkt der pflanzlichen Fette 9 liegende Temperatur erhitzt sein. Beim gezeigten Ausführungsbeispiel werden die pflanzlichen Fette 9 von nicht-laurischem Palmöl gebildet, dessen Schmelzpunkt bei ca. 42 °C liegt. Das heißt, das Palmöl wird auf ca. 45 °C erhitzt, bevor es in die Geliermittel 1-Lösemittel 2, 2'-tierische-Fette 7-Mischung, deren Temperatur ebenfalls bei 45 °C liegt, eingerührt wird. Nachdem die Mischung aus Geliermittel 1, Lösemittel 2, 2' und Fettträger 7, 9 in der Homogenisationseinrichtung 8 dispergiert wurde, wird diese Mischung in den Haupttank 10 gepumpt, wo sie unter ständigem Rühren mit 250 bis 350 U/min auf einer Temperatur von ca. 45 °C gehalten wird. In diesem Schritt VII wird der pH-Wert der alle Rohstoffe 1, 2, 2', 7, 9 enthaltenden Mischung kontrolliert. Um Ausflockungen beim anschließenden UHT-Prozess zu vermeiden, sollte der pH-Wert bei 6,6 bis 6,7 liegen. Ein zu niedriger pH-Wert kann beispielsweise mit Natronlauge (NaOH; 1 Teil Lauge 5 Teile Wasser) korrigiert werden.

Im Schritt VIII wird die Mischung über einen Filter 9, der Partikel mit einer Korngröße über 15 mesh, vorzugsweise über 20 mesh, herausfiltert, in eine UHT-Anlage 12 gepumpt. In der UHT-Anlage 12 erfolgt im Schritt IX zur Erzielung einer großen Haltbarkeit des Endproduktes eine kurzfristige Erhitzung über 135 °C, vorzugsweise über 140 °C. Beim dargestellten Ausführungsbeispiel arbeitet die UHT-Anlage 12 nach dem Dampfsterilisationsverfahren, das heißt, die Mischung wird für ca. 6 sec auf 142 °C erhitzt. Selbstverständlich wäre aber auch die Verwendung von Platten- oder Röhrenerhitzern denkbar und zielführend.

Im Anschluss daran wird die Mischung einer Kühleinrichtung 13 zugeführt, wo sie im Schritt X auf eine zwischen 60 °C und 65 °C liegende Temperatur gekühlt wird. Von der Kühlanlage 13 wird die Mischung in einen Homogenisator 14 gepumpt und dort im Schritt XI zweistufig homogenisiert, wobei die erste Stufe der Homogenisation bei einem Druck von etwa 120 bar und die zweite Stufe bei einem Druck von etwa 70 bar erfolgt.

Danach wird die Mischung in einen Steriltank 15, der ebenso wie der Mischtank 4 über einen Doppelmantel 16 und ein Rührwerk 17 verfügt, gepumpt. Im Steriltank 15 wird die Mischung im Schritt XII unter ständigem Rühren auf eine Temperatur zwischen 26 °C und 28 °C eingestellt, bevor im Schritt XIII eine vorzugsweise aseptische Abfüllung bei etwa 26 °C in beispielsweise aus Karton und/oder Papier bestehende mit Aluminium und/oder Kunststoff (Polyethylen) ausgekleidete Verpackungseinheiten 18 erfolgt. In weiterer Folge sollte im Kühlhaus ein rasches Abkühlen auf mindestens 15 °C durchgeführt werden.

Das beschriebene Beispiel eines möglichen Herstellungsverfahrens ist selbstverständlich nicht in einschränkendem Sinne zu verstehen, sondern eben nur ein Beispiel von zahlreichen Möglichkeiten, den Erfindungsgedanken zu verwirklichen. Erfindungswesentlich ist jedenfalls die Einhaltung der Temperaturparameter, insbesondere während des Quellvorgangs des Grundansatzes sowie während des Einrührens der flüssigen pflanzlichen Fette in den Grundansatz.

## Patentansprüche

1. Verfahren zur Herstellung eines einen Fettträger, einen Stabilisator bzw. ein Geliermittel und ein Lösemittel für den Stabilisator bzw. das Geliermittel enthaltenden Nahrungsmittels, wobei der Fettträger pflanzliche Fettanteile beinhaltet, bei dem der Stabilisator bzw. das Geliermittel im vorzugsweise erwärmten Lösemittel aufgelöst wird und diese Mischung anschließend in erwärmtem Zustand quellen gelassen wird, bevor dieser Mischung der Fettträger beigemengt wird, wobei die pflanzlichen Fettanteile des Fettträgers in flüssiger Form beigemischt werden, wobei die pflanzlichen Fettanteile bei Raumtemperatur eine feste Konsistenz aufweisen und auf eine zwischen 2 % und 20 %, vorzugsweise 10 %, über dem Schmelzpunkt liegende Temperatur erwärmt werden, bevor sie der das Lösemittel und den Stabilisator bzw. das Geliermittel enthaltenden Mischung beigemengt werden, **dadurch gekennzeichnet, dass** als Lösemittel (2, 2') Sojamilch verwendet wird.

2. Verfahren nach Anspruch 1, **dadurch gekennzeichnet, dass** der Schmelzpunkt der pflanzlichen Fettanteile (9) zwischen 28°C und 47°C liegt.

3. Verfahren nach Anspruch 2, **dadurch gekennzeichnet, dass** der Schmelzpunkt der pflanzlichen Fettanteile (9) über 35 °C, vorzugsweise bei etwa 42 °C, liegt.

4. Verfahren nach einem der Ansprüche 1 bis 3, **dadurch gekennzeichnet, dass** die pflanzlichen Fettanteile (9) einen Anteil an gesättigten Fettsäuren von wenigstens 35 %, vorzugsweise wenigstens 45 % aufweisen.

5. Verfahren nach einem der Ansprüche 1 bis 4, **dadurch gekennzeichnet, dass** die pflanzlichen Fettanteile (9) des Fettträgers im Wesentlichen, vorzugsweise ausschließlich, von vorzugsweise nicht-laurischem Palmöl gebildet werden.

6. Verfahren nach einem der Ansprüche 1 bis 4, **dadurch gekennzeichnet, dass** die pflanzlichen Fettanteile (9) des Fettträgers Kokosfett und/oder Kakaobutter und/oder Palmkernfett umfassen.

7. Verfahren nach einem der Ansprüche 1 bis 6, **dadurch gekennzeichnet, dass** der Fettanteil des Lösemittels (2, 2') am Nahrungsmittel zwischen 1,5 % und 6 %, vorzugsweise zwischen 3 % und 4 %, liegt.

8. Verfahren nach Anspruch 7, **dadurch gekennzeichnet, dass** der Fettanteil des Lösemittels (2, 2') bei ca. 3,5 % liegt.

9. Verfahren nach einem der Ansprüche 1 bis 8, **dadurch gekennzeichnet, dass** als Stabilisator bzw. als Geliermittel (1) Gelatine verwendet wird.

10. Verfahren nach Anspruch 9, **dadurch gekennzeichnet, dass** die vorzugsweise granulatförmige Gelatine eine Körnung zwischen 35 und 65 mesh, vorzugsweise 50 mesh, und/oder eine Gallertfestigkeit zwischen 200 und 250 Bloomgram, vorzugsweise 220 Bloomgram, aufweist.

11. Verfahren nach Anspruch 9 oder 10, **dadurch gekennzeichnet, dass** die Gelatine eine Viskosität zwischen 34 und 46 Millibar, vorzugsweise 41 Millibar, aufweist.

12. Verfahren nach einem der Ansprüche 1 bis 8, **dadurch gekennzeichnet, dass** der Stabilisator bzw. das Geliermittel (1) ausschließlich pflanzliche Rohstoffe, vorzugsweise pflanzliche Hydrokolloide, beinhaltet.

13. Verfahren nach Anspruch 12, **dadurch gekennzeichnet, dass** der Stabilisator bzw. das Geliermittel (1) eine Mischung von Carrageen, Cellulose sowie Pektin oder Konjac-Mehl ist.

14. Verfahren nach Anspruch 13, **dadurch gekennzeichnet, dass** der Stabilisator bzw. das Geliermittel (1) zusätzlich Alginat, vorzugsweise Sodium-Alginat, und/oder Guar-Gummi beinhaltet.

15. Verfahren nach einem der Ansprüche 1 bis 14, **dadurch gekennzeichnet, dass** die Lösemittel (2, 2') und Stabilisator bzw. Geliermittel (1) enthaltende Mischung zwischen 15 und 45 Minuten, vorzugsweise 25 und 30 Minuten, quellen gelassen wird.

16. Verfahren nach Anspruch 15, **dadurch gekennzeichnet, dass** die Temperatur der Lösemittel (2, 2') und Stabilisator bzw. Geliermittel (1) enthaltenden Mischung während des Quellvorgangs zwischen 10 °C und 35 °C, vorzugsweise bei etwa 20 °C, liegt.

17. Verfahren nach einem der Ansprüche 1 bis 16, **dadurch gekennzeichnet, dass** der Stabilisator bzw. das Geliermittel in einem ersten Schritt in einem Teil der Gesamtlösemittelmenge (2) aufgelöst wird und dieser Mischung danach in einem zweiten Schritt die restliche Lösemittelmenge (2') beigemischt wird, bevor der Quellvorgang beginnt.

18. Verfahren nach einem der Ansprüche 1 bis 17, **dadurch gekennzeichnet, dass** die Lösemittel (2, 2')-Stabilisator bzw. Geliermittel (1)-Mischung nach dem Quellvorgang und vor dem Vermischen mit dem Fettträger kurzfristig auf eine über 50 °C liegende Temperatur, vorzugsweise auf 55 °C, erhitzt wird.

19. Verfahren nach einem der Ansprüche 1 bis 18, **dadurch gekennzeichnet, dass** der Fettträger tierische Fette (7), vorzugsweise Rahm, beinhaltet.

20. Verfahren nach Anspruch 19, **dadurch gekennzeichnet, dass** der Anteil der tierischen Fette (7) am Fettträger über 20 %, vorzugsweise über 35 %, liegt.

21. Verfahren nach Anspruch 19 oder 20, **dadurch gekennzeichnet, dass** der Fettträger im Wesentlichen 50 % pflanzliche und 50 % tierische Fette beinhaltet.

22. Verfahren nach einem der Ansprüche 19 bis 21, **dadurch gekennzeichnet, dass** die tierischen Fette (7), vorzugsweise Rahm, der das Lösemittel (2, 2') und den Stabilisator (1) enthaltenden Mischung unter ständigem Rühren beigemengt werden, vorzugsweise nach Beendigung des Quellvorgangs, wobei die Temperatur der tierischen Fette (7) beim Vermischen mit der Lösemittel-Stabilisator-Mischung bei ca. 5 °C liegt.

23. Verfahren nach Anspruch 1 bis 18, **dadurch gekennzeichnet, dass** der Fettträger ausschließlich pflanzliche Fette (9), vorzugsweise nicht-laurisches Palmöl, beinhaltet.

24. Verfahren nach einem der Ansprüche 1 bis 23, **dadurch gekennzeichnet, dass** die Temperatur der Lösemittel(2, 2')-Stabilisator(1)-Mischung bzw. der Lösemittel(2, 2')-Stabilisator(1)-tierische Fette(7)-Mischung vor dem Vermischen mit den flüssigen pflanzlichen Fetten (9) auf eine zwischen 2 % und 20 %, vorzugsweise 10 %, über dem Schmelzpunkt der pflanzlichen Fettanteile (9) liegende Temperatur eingestellt wird.

25. Verfahren nach einem der Ansprüche 1 bis 24, **dadurch gekennzeichnet, dass** die Temperatur der flüssigen pflanzlichen Fette (9) beim Einrühren in die Lösemittel(2, 2')-Stabilisator(1)-Mischung bzw. Lösemittel(2, 2')-Stabilisator(1)-tierische Fette(7)-Mischung in etwa der Temperatur der Lösemittel(2, 2')-Stabilisator(1)-Mischung bzw. Lösemittel(2, 2')-Stabilisator(1)-tierische Fette(7)-Mischung entspricht.

26. Verfahren nach einem der Ansprüche 1 bis 25, **dadurch gekennzeichnet, dass** das Auflösen der flüssigen pflanzlichen Fette (9) in der Lösemittel(2, 2')-Stabilisator(1)-Mischung bzw. der Lösemittel(2, 2')-Stabilisator(1)-tierische Fette(7)-Mischung unter starkem Rühren, vorzugsweise mit 6000 bis 8000 U/min, beispielsweise mittels eines Homo-Jet-Mixers (8) erfolgt.

27. Verfahren nach einem der Ansprüche 1 bis 25, **dadurch gekennzeichnet, dass** das Auflösen der flüssigen pflanzlichen Fette in der Lösemittel(2, 2')-Stabilisator(1)-Mischung bzw. Lösemittel(2, 2')-Stabilisator(1)-tierische Fette(7)-Mischung in einem Homogenisator, vorzugsweise zweistufig, erfolgt.

28. Verfahren nach einem der Ansprüche 1 bis 27, **dadurch gekennzeichnet, dass** die Lösemittel(2, 2')-Stabilisator(1)-Fettträger(7,9)-Mischung sterilisiert und homogenisiert wird, bevor sie in eine Verpackung (18) abgefüllt wird.

29. Verfahren nach einem der Ansprüche 1 bis 28, **dadurch gekennzeichnet, dass** der pH-Wert der Mischung vor dem Sterilisieren auf einen über 6, vorzugsweise zwischen 6,6 und 6,7, liegenden Wert eingestellt wird.

30. Verfahren nach Anspruch 29, **dadurch gekennzeichnet, dass** die Einstellung des pH-Wertes mittels Natronlauge erfolgt.

31. Verfahren nach einem der Ansprüche 1 bis 30, **dadurch gekennzeichnet, dass** die Lösemittel(2, 2')-Stabilisator(1)-Fettträger(7,9)-Mischung vor dem Sterilisieren gefiltert wird.

32. Verfahren nach Anspruch 31, **dadurch gekennzeichnet, dass** Partikel mit einer Korngröße über 15 mesh, vorzugsweise über 20 mesh, herausgefiltert werden.

33. Verfahren nach einem der Ansprüche 1 bis 32, **dadurch gekennzeichnet, dass** die Mischung vor dem Abfüllen in die Verpackung, vorzugsweise vor dem Homogenisieren, bei einer über 135° C, vorzugsweise über 140° C liegenden Temperatur in einer UHT-Anlage (12) sterilisiert wird.

34. Verfahren nach Anspruch 33, **dadurch gekennzeichnet, dass** die UHT-Anlage (12) einen Röhren- bzw. Plattenerhitzer umfasst.

35. Verfahren nach Anspruch 33, **dadurch gekennzeichnet, dass** die UHT-Anlage (12) eine Dampfstrahlpumpe umfasst.

36. Verfahren nach Anspruch 35, **dadurch gekennzeichnet, dass** die Mischung für ca. 6 Sekunden auf eine über 135° C liegende Temperatur, vorzugsweise auf 142° C, erhitzt wird.

37. Verfahren nach einem der Ansprüche 1 bis 36, **dadurch gekennzeichnet, dass** die Homogenisation bei einer Temperatur unter 80° C, vorzugsweise zwischen 60° C und 65° C, vorzugsweise zweistufig, erfolgt.

38. Verfahren nach Anspruch 37, **dadurch gekennzeichnet, dass** die erste Stufe der Homogenisation bei einem Druck von etwa 120 bar und die zweite Stufe bei einem Druck von etwa 70 bar erfolgt.

39. Verfahren nach einem der Ansprüche 1 bis 38, **dadurch gekennzeichnet, dass** die Mischung vor dem Abfüllen in die Verpackung (18) und nach dem Homogenisieren in einen Steriltank (15) gepumpt wird und dort auf eine zwischen 20 °C und 35 °C, vorzugsweise zwischen 26 °C und 28° C liegende Temperatur gekühlt wird.

40. Verfahren nach einem der Ansprüche 1 bis 39, **dadurch gekennzeichnet, dass** die Abfüllung bei ca. 26° C erfolgt.

41. Nahrungsmittel erhältlich durch ein Verfahren nach einem der Ansprüche 1 bis 40, mit einem Fettträger, einem Stabilisator bzw. einem Geliermittel und einem Lösemittel für den Stabilisator bzw. das Geliermittel, **dadurch gekennzeichnet, dass** es pflanzliche Fettanteile, deren Schmelzpunkt über 35°C liegt, aufweist und dass es Sojamilch enthält.

42. Nahrungsmittel nach Anspruch 41, **dadurch gekennzeichnet, dass** der Fettanteil der Sojamilch am Nahrungsmittel bei ca. 3,5% liegt.

43. Nahrungsmittel nach Anspruch 42 **dadurch gekennzeichnet, dass** der Fettanteil des Fettträgers bei ca. 11,5% liegt.

## Claims

1. Process for the preparation of a foodstuff containing a fat carrier, a stabilizer or a gelling agent and a solvent for the stabilizer or the gelling agent, the fat carrier comprising plant fat contents, in which the stabilizer or the gelling agent is dissolved in the solvent, which is preferably heated, and this mixture is then left to swell in the heated state, before the fat carrier is admixed to this mixture, the plant fat contents of the fat carrier being admixed in liquid form, wherein the plant fat contents have a semi-solid or solid consistency at room temperature and are heated to a temperature between 2 % and 20 %, preferably 10 %, above the melting point, before they are admixed to the mixture containing the solvent and the stabilizer or the gelling agent, **characterized in that** soya milk is used as the solvent (2, 2').

2. Process according to claim 1, **characterized in that** the melting point of the plant fat contents (9) is between 28 °C and 47 °C.

3. Process according to claim 2, **characterized in that** the melting point of the plant fat contents (9) is above 35 °C, preferably about 42 °C.

4. Process according to one of claims 1 to 3, **characterized in that** the plant fat contents (9) have a content of saturated fatty acids of at least 35 %, preferably at least 45 %.

5. Process according to one of claims 1 to 4, **characterized in that** the plant fat contents (9) of the fat carrier are substantially, preferably exclusively, formed from preferably non-lauric palm oil.

6. Process according to one of claims 1 to 4, **characterized in that** the plant fat contents (9) of the fat carrier include coconut fat and/or cacao butter and/or palm kernel fat.

7. Process according to one of the claims 1 to 6, **characterized in that** the fat content of the solvent (2,2') in the foodstuff is between 1.5 % and 6 %, preferably between 3 % and 4 %.

8. Process according to claim 7, **characterized in that** the fat content of the solvent (2, 2') is approx. 3.5 %.

9. Process according to one of claims 1 to 8, **characterized in that** gelatine is used as the stabilizer or the gelling agent (1).

10. Process according to claim 9, **characterized in that** the gelatine, which is preferably in the form of granules, has a particle size of between 35 and 65 mesh, preferably 50 mesh, and/or a gelatine strength of between 200 and 250 Bloom gram, preferably 220 Bloom gram.

11. Process according to claim 9 or 10, **characterized in that** the gelatine has a viscosity of between 34 and 46 millibar, preferably 41 millibar.

12. Process according to one of claims 1 to 8, **characterized in that** stabilizer or the gelling agent (1) comprises exclusively plant raw materials, preferably plant hydrocolloids.

13. Process according to claim 12, **characterized in that** the stabilizer or the gelling agent (1) is a mixture of carrageenan, cellulose and pectin or konjac flour.

14. Process according to claim 13, **characterized in that** the stabilizer or the gelling agent (1) additionally comprises alginate, preferably sodium alginate, and/or guar gum.

15. Process according to one of claims 1 to 14, **characterized in that** the mixture containing solvent (2, 2') and stabilizer or gelling agent (1) is left to swell for between 15 and 45 minutes, preferably 25 and 30 minutes.

16. Process according to claim 15, **characterized in that** during the swelling operation the temperature of the mixture containing solvent (2, 2') and stabilizer or gelling agent (1) is between 10 °C and 35 °C, preferably about 20 °C.

17. Process according to one of claims 1 to 16, **characterized in that** the stabilizer or the gelling agent is dissolved in a portion of the total amount of solvent (2) in a first step, and the remaining amount of solvent (2') is then admixed to this mixture in a second step, before the swelling operation starts.

18. Process according to one of claims 1 to 17, **characterized in that** the solvent (2, 2')-stabilizer or gelling agent (1) mixture is heated briefly to a temperature above 50 °C, preferably to 55 °C, after the swelling operation and before the mixing with the fat carrier.

19. Process according to one of claims 1 to 18, **characterized in that** the fat carrier comprises animal fats (7), preferably cream.

20. Process according to claim 19, **characterized in that** the content of animal fats (7) in the fat carrier is more than 20 %, preferably more than 35 %.

21. Process according to claim 19 or 20, **characterized in that** the fat carrier substantially comprises 50 % of plant and 50 % of animal fats.

22. Process according to claims 19 to 21, **characterized in that** the animal fats (7), preferably cream, are admixed with constant stirring to the mixture containing the solvent (2, 2') and the stabilizer (1), preferably after the swelling operation has ended, the temperature of the animal fats (7) during mixing with the solvent-stabilizer mixture being approx. 5 °C.

23. Process according to claim 1 to 18, **characterized in that** the fat carrier comprises exclusively plant fats (9), preferably non-lauric palm oil.

24. Process according to one of claims 1 to 23, **characterized in that** the temperature of the solvent (2, 2')-stabilizer (1) mixture or of the solvent (2, 2')-stabilizer (1)-animal fats (7) mixture is adjusted to a temperature between 2 % and 20 %, preferably 10 %, above the melting point of the plant fat contents (9) before the mixing with the liquid plant fats (9).

25. Process according to one of claims 1 to 24, **characterized in that** the temperature of the liquid plant fats (9) during stirring into the solvent (2, 2')-stabilizer (1) mixture or solvent (2, 2')-stabilizer (1)-animal fats (7) mixture approximately corresponds to the temperature of the solvent (2, 2')-stabilizer (1) mixture or solvent (2, 2')-stabilizer (1)-animal fats (7) mixture.

26. Process according to one of claims 1 to 25, **characterized in that** the dissolving of the liquid plant fats (9) in the solvent (2, 2')-stabilizer (1) mixture or solvent (2, 2')-stabilizer (1)-animal fats (7) mixture is carried out with vigorous stirring, preferably at 6,000 to 8,000 rpm, for example by means of a Homo-Jet mixer (8).

27. Process according to one of claims 1 to 25, **characterized in that** the dissolving of the liquid plant fats (9) in the solvent (2, 2')-stabilizer (1) mixture or solvent (2, 2')-stabilizer (1)-animal fats (7) mixture is carried out in a homogenizer, preferably in two stages.

28. Process according to one of claims 1 to 27, **characterized in that** the solvent (2, 2')-stabilizer (1)-fat carrier (7, 9) mixture is sterilized and homogenized, before it is transferred into packaging (18).

29. Process according to one of claims 1 to 28, **characterized in that** the pH of the mixture is adjusted to a value above 6, preferably between 6.6 and 6.7, before the sterilization.

30. Process according to claim 29, **characterized in that** the pH is adjusted by means of sodium hydroxide solution.

31. Process according to one of claims 1 to 35, **characterized in that** the solvent (2, 2')-stabilizer (1)-fat carrier (7, 9) mixture is filtered before the sterilization.

32. Process according to claim 31, **characterized in that** particles having a particle size above 15 mesh, preferably above 20 mesh, are filtered out.

33. Process according to one of claims 1 to 32, **characterized in that** the mixture is sterilized in a UHT unit at a temperature above 135 °C, preferably above 140 °C, before transfer into the packaging, preferably before the homogenization.

34. Process according to claim 33, **characterized in that** the UHT unit (12) includes a tube or plate heater.

35. Process according to claim 33, **characterized in that** the UHT unit (12) includes a steam jet pump.

36. Process according to claim 35, **characterized in that** the mixture is heated to a temperature above 135 °C, preferably to 142 °C, for approx. 6 seconds.

37. Process according to one of claims 1 to 36, **characterized in that** the homogenization is carried out at a temperature below 80 °C, preferably between 60 °C and 65 °C, preferably in two stages.

38. Process according to claim 37, **characterized in that** the first stage of the homogenization is carried out under a pressure of about 120 bar and the second stage is carried out under a pressure of about 70 bar.

39. Process according to one of claims 1 to 38, **characterized in that** the mixture is pumped into a sterile tank (15) before transfer into the packaging (18) and after the homogenization, and is cooled there to a temperature between 20 °C and 35 °C, preferably between 26 °C and 28 °C.

40. Process according to one of claims 1 to 39, **characterized in that** the cooling is carried out at approx. 26 °C.

41. Foodstuff obtainable by a process according to one of claims 1 to 40, with a fat carrier, a stabilizer or a gelling agent and a solvent for the stabilizer or the gelling agent, **characterized in that** it contains plant fat contents, the melting point of which is above 35 °C and **in that** it contains soya milk.

42. Foodstuff according to claim 41, **characterized in that** the fat content of the soya milk in the foodstuff being approx. 3.5 %.

43. Foodstuff according to claim 42, **characterized in that** the fat content of the fat carrier is approx. 11.5%.

## Revendications

1. Procédé de fabrication d'un produit alimentaire contenant un support lipidique, un stabilisateur, respectivement un gélifiant, et un solvant pour le stabilisateur, respectivement le gélifiant, dans lequel le support lipidique contient des fractions de graisse végétale, dans lequel on dissout le stabilisateur, respectivement le gélifiant, dans le solvant, de préférence réchauffé, et on laisse ensuite gonfler ce mélange à l'état réchauffé, avant d'ajouter ce mélange au support lipidique, les fractions de graisse végétale du support lipidique étant mélangées sous forme liquide, sachant que les fractions de graisse végétale présentent à la température ambiante une consistance solide et sont réchauffées à une température située entre 2 % et 20 %, de préférence à 10 % au-dessus de la température de fusion avant d'être ajoutées au mélange contenant le stabilisateur, respectivement le gélifiant, **caractérisé en ce que** du lait de soja est utilisé comme solvant (2, 2').

2. Procédé selon la revendication 1, **caractérisé en ce que** le point de fusion des fractions de graisse végétale (9) est compris entre 28 °C et 47 °C.

3. Procédé selon la revendication 2, **caractérisé en ce que** le point de fusion des fractions de graisse végétale (9) est situé au-dessus de 35 °C, de préférence à environ 42 °C.

4. Procédé selon l'une quelconque des revendications 1 à 3, **caractérisé en ce que** les fractions de graisse végétale (9) présentent une proportion d'acides gras saturés d'au moins 35 %, de préférence d'au moins 45 %.

5. Procédé selon l'une quelconque des revendications 1 à 4, **caractérisé en ce que** les fractions de graisse végétale (9) du support lipidique sont formées essentiellement, de préférence exclusivement, d'huile de palme non laurique.

6. Procédé selon l'une quelconque des revendications 1 à 4, **caractérisé en ce que** les fractions de graisse végétale (9) du support lipidique comprennent de la graisse de coprah et/ou du beurre de cacao et/ou de la graisse de graine de palmier.

7. Procédé selon l'une quelconque des revendications 1 à 6, **caractérisé en ce que** la proportion de graisse du solvant (2, 2') dans le produit alimentaire est comprise entre 1,5 % et 6 %, de préférence entre 3 % et 4 %.

8. Procédé selon la revendication 7, **caractérisé en ce que** la proportion de graisse du solvant (2, 2') est voisine de 3,5 % environ.

9. Procédé selon l'une quelconque des revendications 1 à 8, **caractérisé en ce que** comme stabilisateur, respectivement comme gélifiant, on utilise de la gélatine.

10. Procédé selon la revendication 9, **caractérisé en ce que** la gélatine, de préférence sous forme de granulés, présente une granulométrie entre 35 et 65 mesh, de préférence de 50 mesh et/ou une résistance de gel entre 200 et 250 bloomgrammes, de préférence 220 bloomgrammes.

11. Procédé selon la revendication 9 ou 10, **caractérisé en ce que** la gélatine présente une viscosité comprise entre 34 et 46 millibars, de préférence de 41 millibars.

12. Procédé selon l'une quelconque des revendications 1 à 8, **caractérisé en ce que** le stabilisateur, respectivement le gélifiant (1) contient exclusivement des matières premières végétales, de préférence des hydrocolloïdes végétaux.

13. Procédé selon la revendication 12, **caractérisé en ce que** le stabilisateur, respectivement le gélifiant (1) est un mélange de carraghénane, de cellulose, ainsi que de pectine ou de farine de Konjac.

14. Procédé selon la revendication 13, **caractérisé en ce que** le stabilisateur, respectivement le gélifiant (1) contient en plus de l'alginate, de préférence de l'alginate de sodium et/ou de la gomme de guar.

15. Procédé selon l'une quelconque des revendications 1 à 14, **caractérisé en ce que** l'on laisse gonfler le mélange contenant les solvants (2, 2') et le stabilisateur, respectivement le gélifiant(1) entre 15 et 45 minutes, de préférence entre 25 et 30 minutes.

16. Procédé selon la revendication 15, **caractérisé en ce que** la température du mélange contenant les solvants (2, 2') et le stabilisateur, respectivement le gélifiant (1) est comprise pendant le processus de gonflement entre 10 °C et 35 °C, de préférence est voisine de 20 °C environ.

17. Procédé selon l'une quelconque des revendications 1 à 16, **caractérisé en ce que** dans une première étape, on dissout le stabilisateur, respectivement le gélifiant (1), dans une partie de la quantité totale de solvant (2) et **en ce que** dans une deuxième étape, on ajoute ensuite à ce mélange le reste de la quantité de solvant (2'), avant que le processus de gonflement ne commence.

18. Procédé selon l'une quelconque des revendications 1 à 17, **caractérisé en ce que** l'on chauffe brièvement le mélange du solvant (2, 2') et du stabilisateur, respectivement du gélifiant (1) après le processus de gonflement et avant le mélangeage avec le support lipidique à une température située au-dessus de 50 °C, de préférence à 55 °C.

19. Procédé selon l'une quelconque des revendications 1 à 18, **caractérisé en ce que** le support lipidique contient des graisses animales (7), de préférence de la crème.

20. Procédé selon la revendication 19, **caractérisé en ce que** la proportion de graisses animales (7) dans le support lipidique est située au-dessus de 20 %, de préférence au-dessus de 35 %.

21. Procédé selon la revendication 19 ou 20, **caractérisé en ce que** le support lipidique contient essentiellement 50 % de graisses végétales et 50 % de graisses animales.

22. Procédé selon l'une quelconque des revendications 19 à 21, **caractérisé en ce que** les graisses animales (7), de préférence de la crème, sont ajoutées sous agitation constante au mélange contenant le solvant (2, 2') et le stabilisateur (1), de préférence après la fin du processus de gonflement, la température des graisses animales (7) étant située au voisinage d'environ 5 °C lors du mélangeage avec le mélange de solvant et de stabilisateur.

23. Procédé selon l'une quelconque des revendications 1 à 18, **caractérisé en ce que** le support lipidique contient exclusivement des graisses végétales (9), de préférence de l'huile de palme non laurique.

24. Procédé selon l'une quelconque des revendications 1 à 23, **caractérisé en ce que** l'on ajuste la température du mélange du solvant (2, 2') et du stabilisateur (1), respectivement du mélange du solvant (2, 2'), du stabilisateur (1) et des graisses animales (7) avant le mélangeage avec les graisses végétales (9) liquides, à une température entre 2 % et 20 %, de préférence de 10 % au-dessus du point de fusion des fractions de graisse végétale (9).

25. Procédé selon l'une quelconque des revendications 1 à 24, **caractérisé en ce que** lors de l'addition avec mélangeage dans le mélange de solvant (2, 2') et de stabilisateur (1), respectivement dans le mélange de solvant (2, 2'), de stabilisateur (1) et de graisses animales (7), la température des graisses végétales (9) liquides correspond à peu près à celle du mélange de solvant (2, 2') et de stabilisateur (1), respectivement du mélange de solvant (2, 2'), de stabilisateur (1) et de graisses animales (7).

26. Procédé selon l'une quelconque des revendications 1 à 25, **caractérisé en ce que** la dissolution des graisses végétales (9) liquides dans le mélange de solvant (2, 2') et de stabilisateur (1), respectivement dans le mélange de solvant (2, 2'), de stabilisateur (1) et de graisses animales (7), s'effectue sous forte agitation, de préférence sous 6000 à 8000 tr/min, par exemple au moyen d'un mixer Homo-Jet (8).

27. Procédé selon l'une quelconque des revendications 1 à 25, **caractérisé en ce que** la dissolution des graisses végétales liquides dans le mélange de solvant (2, 2') et de stabilisateur (1), respectivement dans le mélange de solvant (2, 2'), de stabilisateur (1) et de graisses animales (7), s'effectue dans un homogénéisateur, de préférence en deux étapes.

28. Procédé selon l'une quelconque des revendications 1 à 27, **caractérisé en ce que** le mélange de solvant (2, 2'), de stabilisateur (1) et de support lipidique (7, 9) est stérilisé et homogénéisé avant d'être conditionné dans un emballage (18).

29. Procédé selon l'une quelconque des revendications 1 à 28, **caractérisé en ce qu'**avant la stérilisation, on ajuste le pH du mélange à une valeur supérieure à 6, de préférence entre 6,6 et 6,7.

30. Procédé selon la revendication 29, **caractérisé en ce que** l'ajustement du pH s'effectue au moyen de soude.

31. Procédé selon l'une quelconque des revendications 1 à 30, **caractérisé en ce que** le mélange de solvant (2, 2'), de stabilisateur (1) et de support lipidique (7, 9) est filtré avant la stérilisation.

32. Procédé selon la revendication 31, **caractérisé en ce que** les particules d'une granulométrie au-dessus de 15 mesh, de préférence au-dessus de 20 mesh, sont éliminées par filtration.

33. Procédé selon l'une quelconque des revendications 1 à 32, **caractérisé en ce qu'**avant le conditionnement dans l'emballage, de préférence avant l'homogénéisation, le mélange est stérilisé dans une installation UHT (12) à une température au-dessus de 135 °C, de préférence au-dessus de 140 °C.

34. Procédé selon la revendication 33, **caractérisé en ce que** l'installation UHT (12) comprend un réchauffeur à tubes, respectivement à plaques.

35. Procédé selon la revendication 33, **caractérisé en ce que** l'installation UHT (12) comprend une pompe à éjecteur à vapeur.

36. Procédé selon la revendication 35, **caractérisé en ce que** le mélange est chauffé pendant environ 6 secondes à une température au-dessus de 135 °C, de préférence à 142 °C.

37. Procédé selon l'une quelconque des revendications 1 à 36, **caractérisé en ce que** l'homogénéisation s'effectue à une température en dessous de 80 °C, de préférence entre 60 °C et 65 °C, de préférence en deux étapes.

38. Procédé selon la revendication 37, **caractérisé en ce que** la première étape de l'homogénéisation s'effectue à une pression d'environ 120 bar et la deuxième étape à une pression d'environ 70 bar.

39. Procédé selon l'une quelconque des revendications 1 à 38, **caractérisé en ce que** le mélange est pompé avant le conditionnement dans l'emballage (18) et après l'homogénéisation dans une citerne stérile (15) et y est refroidi à une température comprise entre 20 °C et 35 °C, de préférence entre 26 °C et 28 °C.

40. Procédé selon l'une quelconque des revendications 1 à 39, **caractérisé en ce que** le conditionnement s'effectue à 26 °C environ.

41. Produit alimentaire pouvant être obtenu par un procédé selon l'une quelconque des revendications 1 à 40, avec un support lipidique, un stabilisateur, respectivement un gélifiant et un solvant pour le stabilisateur, respectivement le gélifiant, **caractérisé en ce qu'**il comporte des fractions de graisse végétale dont le point de fusion se trouve au-dessus de 35 °C et **en ce qu'**il contient du lait de soja.

42. Produit alimentaire selon la revendication 41, **caractérisé en ce que** la proportion de graisse du lait de soja dans le produit alimentaire est voisine de 3,5 % environ.

43. Produit alimentaire selon la revendication 42, **caractérisé en ce que** la proportion de graisse du support lipidique est voisine de 11,5 % environ.
